Europäisches Patentamt

**European Patent Office**

Office européen des brevets

(19)

(11) Numéro de publication: **0 271 440**
A2

## (12) DEMANDE DE BREVET EUROPEEN

(21) Numéro de dépôt: **87810696.2**

(22) Date de dépôt: **26.11.87**

(51) Int. Cl.⁴: **G 01 N 27/26**

(30) Priorité: **05.12.86 CH 4855/86**

(43) Date de publication de la demande:
**15.06.88 Bulletin 88/24**

(84) Etats contractants désignés:
**AT BE CH DE ES FR GB IT LI LU NL SE**

(71) Demandeur: **GENOFIT S.A.**
**110 chemin du Pont-du-Centenaire**
**CH-1228 Plan-les-Ouates (CH)**

(72) Inventeur: **Jarron, Pierre**
**35 route de Prévessin**
**F-01210 Ferney-Voltaire (FR)**

**Gazeau, Michel**
**c/o GENOFIT S.A. 110 ch. de Pont du Centenaire**
**CH-1228 Plan-les-Ouates (CH)**

**Pasquier, Patrice**
**c/o GENOFIT S.A. 110 ch. de Pont du Centenaire**
**CH-1228 Plan-les-Ouates (CH)**

(74) Mandataire: **Vuille, Roman et al**
**c/o KIRKER & Cie S.A. 14, rue du Mont-Blanc Case**
**Postale 872**
**CH-1211 Genève 1 (CH)**

(54) **procédé et dispositif pour l'analyse séquentielle de molécules très complexes, telles que des acides nucléiques.**

(57) On part d'un éléctrophorétogramme obtenu au moyen de segments d'acidesnucléiques marqués par un isotope radioactif et divisés en fragments de poids moléculaires différents et chimiquement distincts (A, C, G, T), que l'on soumet à l'électrophorèse en couche mince. L'éléctrophorétogramme est lu directement, automatiquement, en bas de colonne par au moins un détecteur-compteur d'électrons devant lequel on laisse défiler,au fur et à mesure de l'électrophorèse, lesdits fragments en mouvement migratoire sélectif. On transmet à un ordinateur, pour traitement et analyse, les signaux de sortie du détecteur-compteur d'électrons.

La grande sensibilité de la détection permet d'abaisser notablement le taux d'isotope radioactif. La détection des fragments n'est pas limitée à la longueur d'une plaque d'électrophorèse. Les pertes de temps et les erreurs dues au facteur humain sont éliminées en grande partie du fait de l'automaticité des opérations de lecture et d'interprétation.

EP 0 271 440 A2

## Description

Procédé et dispositif pour l'analyse séquentielle de molécules très complexes, telles que des acidesnucléiques

On connaît actuellement des procédés d'analyse séquentielle d'acides nucléiques produits par des microorganismes ou des tissus cellulaires et obtenus à partir de produits de base marqués à l'aide d'un isotope radioactif tel que le $^{35}$S ou le $^{32}$P, par exemple. Selon ces procédés on fragmente ces molécules par voie chimique (Maxam et Gilbert), ou on synthétise par voie enzymatique (Sanger et Coulson), ce qui a pour résultat des fragments caractéristiques, spécifiques de l'une ou plusieurs des quatre bases chimiques suivantes : adénosine (A), cytosine (C), guanosine (G) et thymidine (T), constitutives des acides nucléiques (= maillons de la chaîne) et obtenues par quatre réactions distinctes et conduisant à quatre mélanges distincts du point de vue chimique. Ensuite, on sépare, en parallèle, les fragments d'acides nucléiques contenus dans les quatre mélanges, par électrophorèse sur couche mince (gel d'acrylamide), en quatre séries ordonnées chacune selon le poids moléculaire et la charge électrique de ces fragments et on met ensuite en contact la plaque d'électrophorèse avec un film sensible aux électrons, jusqu'à obtention d'un autoradiogramme. Ce dernier est ensuite analysé par un opérateur, par lecture et repérage des fragments caractéristiques, de chaque base, en vue de la reconnaissance de la chaîne d'acides nucléiques de départ (étalonnage, référence, recoupements).

Cette technique est la plus couramment utilisée dans les laboratoires. Elle présente toutefois les inconvénients suivants :

- séparation insuffisante, notamment pour ce qui est des fragments lourds, en raison de la migration limitée à la longueur de la plaque d'électrophorèse;

- interprétation malaisée, voire inexacte de l'auto radiogramme si la résolution est insuffisante;

- sensibilité faible du film, demandant des quantités relativement importantes de produit radioactif.

L'impression du film se fait par le noircissement produit par les électrons venant du gel et frappant le film. Du fait de la faible sensibilité du film cette opération nécessite un temps important, ce qui entraîne une diminution de la résolution, à cause de la diffusion des électrons et de l'augmentation du noircissement général du film (bruit de fond).

- lecture et interprétation lentes de l'autoradiogramme par l'analyste (facteur humain).

Une deuxième méthode connue (S. Beck & F.M. Pohl, 1984. DNA sequencing with direct blotting electrophoresis. EMBO J. 3:2905-2909) consiste à placer le gel chargé des bandes de produit marqué entre des parois verticales et à disposer à la base une bande mobile longitudinalement, qui vient recevoir les molécules d'acide nucléique marquées sortant à l'extrémité inférieure du gel sous l'effet du champ électrique.

Cette méthode conduit à un support sur lequel les bandes de molécules d'acide nucléique peuvent être relativement espacées, mais par contre l'analyse doit se faire selon la méthode précédente, c'est-à-dire par report sur un film photographique. La résolution est améliorée d'un côté par l'espacement réglable des bandes, mais d'un autre côté la diminution de résolution signalée dans le premier cas subsiste ici.

Une autre méthode d'analyse séquentielle, connue depuis peu de temps (Lloyd M. Smith et al., Nature, vol. 321, 12 juin 1986), a été proposée en vue de remédier partiellement à ces inconvénients et au danger inhérent à l'emploi de substances radioactives. Elle fait appel à des fragments d'acides nucléiques marqués à l'aide de groupes chromophores fluorescents.

On synthétise des fragments d'acide nucléique de tailles variables par voie enzymatique classique conduisant à plusieurs mélanges distincts de fragments. Le marquage se fait à l'aide d'un chromophore caractéristique de chaque base (A, C, G, T), puis on fait passer les mélanges ainsi marqués sur une colonne d'électrophorèse. En bas de colonne, on excite une zone de celle-ci par un rayon laser de fréquence appropriée et on détecte les fragments fluorescents au fur et à mesure de leur passage devant une cellule photosensible. On multiplie le signal lumineux reçu et on le traite par un ordinateur (intégration, comparaison, mémorisation, détermination) donnant un résultat sous forme graphique.

Ce procédé a l'avantage d'exclure les produits radioactifs et de permettre une détection et un traitement rapide des données, mais les chromophores différents influencent la vitesse de migration des molécules auxquelles ils sont attachés, ce qui peut introduire des erreurs; il est en outre d'une sensibilité faible, et ne convient que dans le cas de la méthode enzymatique.

La présente invention vise à fournir une nouvelle méthode, représentant une amélioration notable vis-à-vis de ces procédés connus. Elle se base sur l'emploi de marqueurs radioactifs en quantités plus faibles que dans les deux premières techniques indiquées, et sur l'utilisation de détecteurs-compteurs d'électrons (particules bêta) de ces marqueurs pour compter le nombre des électrons reçus par le détecteur et en déduire les informations cherchées, par des moyens automatiques.

L'invention comprend un procédé conforme à la revendication 1 et un dispositif conforme à la revendication 4.

Le dessin annexé représente, à titre d'exemples, des formes d'exécution du dispositif et illustre, à titre d'exemples, des formes de mise en oeuvre du procédé.

Fig. 1 est une vue schématique, en coupe, du détecteur d'électrons d'une première forme d'exécution du dispositif.

Fig. 2 est une vue agrandie d'une partie de la fig.1.

Fig. 3 est une vue analogue à la fig. 2, mais relative à une deuxième forme d'exécution du détecteur.

Fig. 4 est un diagramme explicatif du fonctionnement du détecteur de la première forme d'exécution.

Fig. 5 est un diagramme analogue à la fig. 4 mais relatif à la deuxième forme d'exécution.

Fig. 6 est un diagramme montrant schématiquement l'ensemble du dispositif comportant le détecteur selon les fig. 1 et 2 ou la fig. 3.

Fig. 7 et 8 illustrent un exemple de topologie du détecteur d'électrons de l'une ou l'autre des deux formes d'exécution.

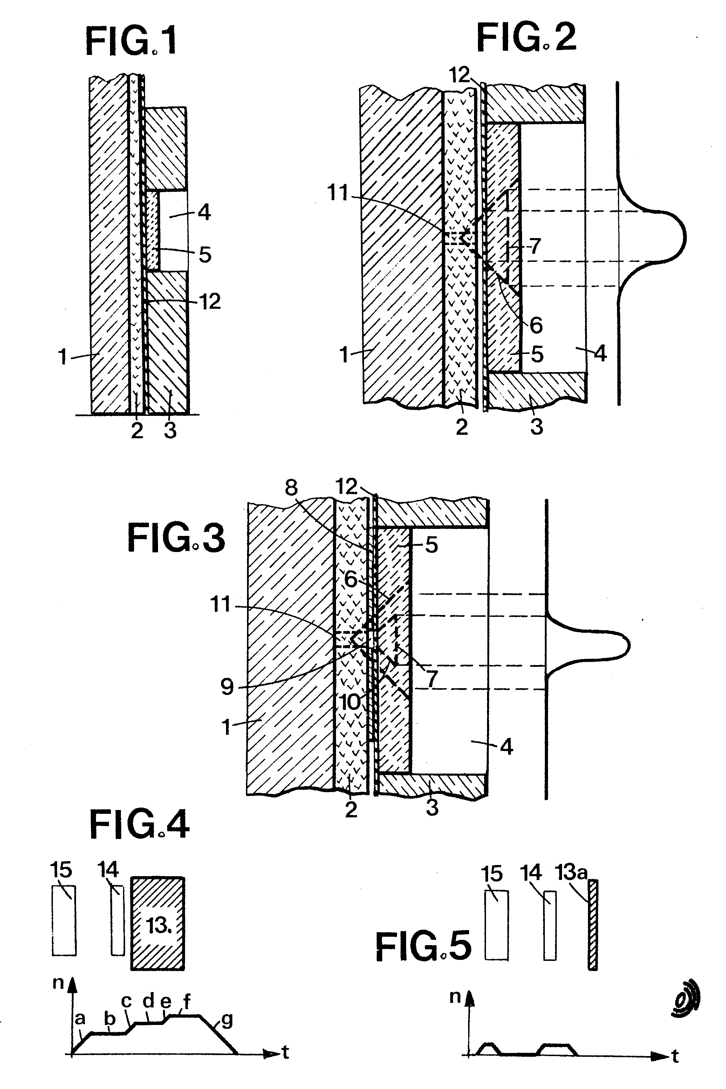

La fig. 1 représente schématiquement, en coupe à grande échelle, la partie inférieure de la colonne d'électrophorèse, munie de la première forme d'exécution du détecteur du dispositif selon l'invention.

En 1 est la plaque de verre sur laquelle est disposée la couche de gel 2 auquel sont incorporés les fragments marqués à analyser. Cette couche a, par exemple, une épaisseur de 200 microns. En 3 se trouve une autre plaque, de matière conductrice de la chaleur et électriquement isolante, du verre par exemple, disposée à une très faible distance du gel 2, de par exemple 20 microns, grâce à un film 12 protecteur, électriquement isolant et imperméable. Il y a avantage à choisir l'épaisseur de ce film aussi faible que possible, pour minimiser l'erreur de parallaxe.

Dans cette plaque 3 est pratiqué un trou 4, la traversant, qui constitue une fenêtre dans laquelle est fixé un élément du détecteur d'électrons 5 constitué par une plaquette en matériel semi-conducteur tel que du silicium, dont une des faces est à fleur avec la face de la plaque 3 proche du gel 2. L'épaisseur du détecteur 5 est, par exemple, de 300 microns.

Pour obtenir une bonne résolution, il convient de minimiser l'épaisseur du gel 2.

La fig. 2 représente un agrandissement de la partie de la fig. 1 où se trouve l'élément de détecteur d'électrons 5.

Sous l'effet de l'électrophorèse, les divers fragments de segments d'acides nucléiques se groupent sous forme de bandes qui se séparent en raison de leur vitesse de migration différente, chaque bande étant formée de fragments identiques. Ces bandes ont chacune, sous l'effet du champ électrique d'électrophorèse, une certaine vitesse de migration dépendant du poids moléculaire des fragments et de leur charge électrique. Cette différence de vitesse produit l'espacement entre les bandes.

Dans l'exemple considéré, on peut avoir les valeurs préférées suivantes :
Hauteur de la plaque 1 : 150 mm
Largeur d'un élément détecteur 5 : 3,5 mm
Distance entre éléments détecteurs : 1,5 mm
Champ électrique : 2 à 6 volts/mm
Température d'utilisation : 40°C à 60°C
Vitesse moyenne de migration des bandes : 50 mm/heure à 300 mm/heure selon le poids moléculaire.

Pour fixer la géométrie du détecteur, il est important d'établir le contraste minimum afin de reconnaître la présence d'une bande définie, d'une part, par la limite statistique et, d'autre part, par le bruit de fond.

Sachant que 1 curie correspond à $3,7.10^{10}$ désintégrations par seconde, on peut calculer l'activité - c'est-à-dire le nombre d'électrons libérés - par bande, durant son passage devant le détecteur d'électrons.

Si l'on suppose que le produit migrera complètement sur 3 mètres avec un taux d'occupation des bandes marquées de 10% et que la densité du traceur ($^{35}S$ ou $^{32}P$) est homogène (hypothèse simplifiée), et si l'on choisit la largeur du détecteur (mesurée perpendiculairement au sens de migration des bandes) telle qu'elle soit un peu plus grande que la largeur maximum de bande (dans le même sens perpendiculaire), on pourra calculer le taux de comptage moyen par unité de surface couverte par les bandes, ainsi que le nombre d'électrons reçus (ou coups) d'une bande étalée et le barycentre de chaque bande sur une longueur donnée.

La géométrie du détecteur doit être optimisée pour obtenir :
l'efficacité de détection maximum;
la résolution spatiale la meilleure possible;
la discrimination entre deux bandes les plus rapprochées que l'on ait à détecter sur un gel (résolution double bande);
le minimum de distance - comme déjà indiqué plus haut - entre la face de détection du détecteur et la surface du gel, afin de minimiser l'erreur de parallaxe.

Avec les valeurs indiquées plus haut, on peut calculer que la diffusion des électrons dans le détecteur sera de 270 microns, pour un angle solide de 90°. On a représenté sur la fig. 2, en 6, le cône de diffusion des électrons émis par une bande 11 et par la ligne 7 la limite de diffusion (ou pénétration) des électrons dans le détecteur. Cette valeur de 270 microns résulte d'un calcul simplifié ne tenant compte que de l'effet géométrique, les effets de diffusion multiple des électrons dans le gel et le silicium étant négligés.

Il est possible d'éliminer en partie l'imprécision due à la diffusion des électrons dans le silicium du détecteur en créant des strips adjacents (voir fig. 7 et 8), un véto étant alors créé par une coïncidence électronique de deux strips adjacents, rejetant les électrons arrivant selon un grand angle. Une autre solution, illustrée par l'exemple selon fig. 3, consiste à disposer un masque métallique ou collimateur 8, en plomb de préférence, présentant une fente étroite 9 entre le détecteur 5 et le gel 2. La partie métallique du masque absorbe les électrons et seuls ceux passant par la fente 9 atteignent le détecteur 5.

On a indiqué par le rectangle 11 l'espace occupé par une bande se trouvant en position de travail, c'est-à-dire en regard de la fente 9.

Pour comparer, on a indiqué sur la fig. 3 le cône de diffusion 6 de la fig. 2 et le cône de diffusion 10 obtenu grâce au masque 8. La limite de pénétration 7 est évidemment la même que pour la fig. 2.

Pour compléter la comparaison, on a représenté sur la fig. 4 un diagramme de fonctionnement du détecteur dans le cas des fig. 1 et 2, et sur la fig. 5 un diagramme analogue relatif au cas de la fig. 3.

Les courbes sur la droite des fig. 2 et 3 représentent l'intensité reçue.

### Résolution double bande (cas d'un détecteur monoélément)

Sur la fig. 4, on a indiqué par un rectangle hachuré 13 la surface active du détecteur 5, en 14 une bande étroite de certains fragments de segments d'un acide nucléique, se trouvant dans le gel, et en 15 une bande plus large d'une autre sorte de fragments. Le cheminement de ces bandes devant le détecteur 6 a lieu durant l'électrophorèse. Le diagramme fig. 4 du nombre de coups en fonction du temps t explique ce qui se passe alors :

    a: pénétration de la bande étroite 14 dans le champ 13;

    b: parcours de la bande 14 dans le champ 13;

    c: début de la pénétration de la bande large 15 dans le champ 13;

    d: sortie de la bande étroite 14 hors du champ 13;

    e: fin de la pénétration de la bande large 15 dans le champ 13;

    f: parcours de la bande large 15 dans le champ 13;

    g: sortie de la bande large 15 hors du champ 13.

Par comparaison, la fig. 5 montre ce qui se passe dans le cas de la fig. 3 où l'on a une largeur efficace du détecteur qui est plus faible que celle des bandes.

Le rectangle hachuré 13a, plus étroit que 13 sur la fig. 4, représente la surface active du détecteur déterminée par la fente 9 du masque (ou par sa propre géométrie). La largeur détectée est proportionnelle à la largeur de 13a. Dans ce cas, on voit par la fig. 5, que la résolution est meilleure.

### Résolution

La résolution est déterminée par :

    - l'erreur de parallaxe;

    - la diffusion élastique des électrons dans le gel et dans l'interface gel-détecteur;

    - la géométrie du détecteur;

    - la déformation des bandes;

    - l'alignement de la tête détectrice avec l'axe de la migration;

    - l'efficacité quantique due à l'incertitude statistique.

### Principe de l'électronique de lecture

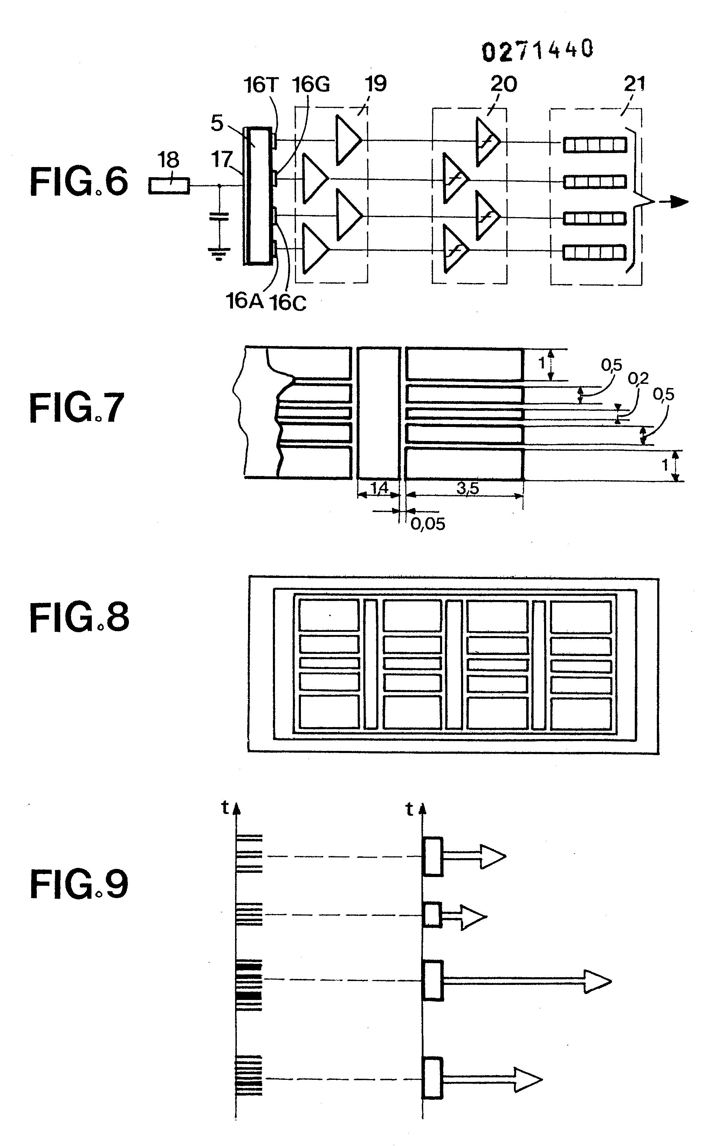

La fig. 6 représente schématiquement la structure d'un détecteur-compteur d'électrons comprenant quatre éléments détecteurs selon fig. 2 ou 3.

Les électrons émis par le traceur ou marqueur ($^{35}S$ ou $^{32}P$) contenu dans l'électrophorétogramme et s'échappant du gel pénètrent dans le détecteur 5. Après un certain parcours dans le silicium, qui est de quelques dizaines de microns pour le $^{35}S$, ces électrons sont finalement absorbés en cédant toute leur énergie au cristal sous forme de paires électron-trou qu'on récoltera sur la face avant jonction du détecteur, sur laquelle sont appliquées quatre électrodes 16A, 16C, 16G, 16T correspondant aux quatre bases chimiques A, C, G, T.

Sur la face arrière du détecteur (qui sera exposée au gel) est disposée une électrode soumise à une tension de polarisation positive par une source 18.

Les charges collectées sur les électrodes 16A, 16C, 16G, 16T sont amplifiées, par un amplificateur quadruple 19 à très bas bruit donnant des impulsions. Ces signaux analogiques impulsionnels sont ensuite discriminés par un comparateur rapide quadruple bas niveau 20, dont le seuil de détection minimum ramené à l'entrée du préamplificateur est réglable.

Ensuite, les impulsions sont envoyées sur une échelle quadruple de comptage 21, lue périodiquement par une ligne reliée à un ordinateur non représenté.

### Géométrie appropriée d'un détecteur d'électrons pour la lecture directe d'un électrophorétogramme

La fig. 7 représente schématiquement une topologie préférée du fait de sa versatilité. Les cotes sont indiquées, à titre d'exemple, en millimètres.

Il y a par élément de détecteur cinq microbandes de détection, de 200 à 1000 microns. Selon l'intensité d'émission d'électrons et la résolution désirée, on pourra choisir l'une ou l'autre des microbandes, les grouper, ou réaliser une coïncidence afin de rejeter les électrons incidents sous grand angle.

Les bandes verticales intercalaires de 1,4 mm de large permettront de connaître le centrage du détecteur par rapport à l'axe de migration des bandes dans le gel. La mesure du centrage se fait en comparant le taux de comptage des bandes intercalaires de droite par rapport à celles de gauche.

La fig. 8 montre la topologie du détecteur complet, pour les quatre canaux A, C, G, T, prêt à être connecté à un préamplificateur à quatre voies, au dos de celui-ci.

### Reconstruction des bandes

Les informations que l'on pourra tirer de la détection directe du passage des fragments marqués sont les suivantes :

    - mesure de l'occurrence de l'apparition des bandes avec une très grande résolution;

    - détermination du nombre de coups par bande, donc mesure quantitative précise;

    - détermination des dimensions des bandes;

    - localisation du barycentre des bandes.

La fig. 9 est un diagramme illustrant le fonctionnement. La partie gauche représente le temps t et le nombre de coups par des traits parallèles, tandis que la partie droite représente de même façon le nombre de coups intégrés par bande. Les flèches indiquent que les nombres de coups intégrés par bande sont envoyés à un ordinateur (ou éventuellement un enregistreur) non représenté.

Bien que l'on ait décrit le cas où le détecteur est fixe et disposé en bas de la colonne d'électrophorèse, il est évident que l'on pourrait avoir la disposition équivalente suivante : le détecteur compteur et le gel ayant subi l'électrophorèse (les bandes étant alors fixes) seraient mobiles l'un par rapport à l'autre. On pourrait aussi faire travailler le détecteur sur un ruban ayant reçu les bandes après électrophorèse, selon la deuxième technique connue indiquée dans l'introduction.

Avantages du procédé et du dispositif décrits

1. Absence totale d'organes mobiles et d'excitation extérieure.

2. Travail par comptage d'électrons, donc résultat très précis et excellente définition des bandes.

3. Amélioration de la qualité et de la rapidité d'obtention de la séquence des acides nucléiques, du fait de l'automaticité de la lecture, et diminution au minimum nécessaire du facteur humain grâce à la coopération de l'ordinateur.

4. La sensibilité et la bonne résolution permettent une diminution de la longueur du gel, ce qui facilite l'utilisation de gels préfabriqués.

5. Le procédé s'applique quelle que soit la méthode de fragmentation préalable choisie (chimique ou enzymatique).

6. Les électrons détectés lors du passage de chaque fragment donnent naissance à un signal qui est immédiatement enregistré et traité par l'ordinateur, d'où rapidité d'obtention du résultat et non plus après développement et lecture de l'autoradiogramme.

7. La sensibilité du dispositif de détection permet d'abaisser le taux de marqueur et par conséquent la dose de radioactivité par rapport à celle nécessaire à la sensibilisation de l'autoradiogramme. D'où un danger de manipulation diminué.

8. La détection des fragments marqués se faisant lors de la migration desdits fragments, on n'est plus limité par la longueur d'une plaque d'électrophorèse, qui conditionne la résolution de la séparation, et l'électrophorèse peut se poursuivre jusqu'à épuisement de tous les fragments des mélanges de départ.

**Revendications**

1. Procédé d'analyse séquentielle de segments de molécules très complexes, telles que celles d'acides nucléiques, marqués au moyen d'un isotope radioactif, selon lequel on produit à partir de ces segments (p. ex. par une méthode chimique ou enzymatique) des fragments de poids moléculaires différents et chimiquement distincts et on soumet ensuite ces fragments à une électrophorèse en couche mince, pour les ordonner en série selon leur poids moléculaire, caractérisé en ce qu'on analyse automatiquement chacune de ces séries au moyen d'un détecteur-compteur d'électrons, pour capter des électrons émis par le marqueur des fragments, et en ce qu'on transmet à un ordinateur, pour traitement et analyse, les signaux de sortie de ce détecteur-compteur d'électrons.

2. Procédé selon la revendication 1, caractérisé en ce qu'on laisse défiler devant le compteur-détecteur d'électrons, au fur et à mesure de l'électrophorèse, lesdits fragments de chaque type, en mouvement migratoire sélectif.

3. Procédé selon la revendication 1, caractérisé en ce qu'on procède au comptage des électrons après l'électrophorèse, en faisant coopérer le détecteur-compteur d'électrons avec la série de fragments de chaque type préalablement séparés par l'électrophorèse.

4. Dispositif pour l'analyse séquentielle de segments de molécules très complexes, telles que celles d'acides nucléiques, marqués au moyen d'un isotope radioactif et divisés en fragments de poids moléculaires différents et chimiquement distincts, comprenant un appareil d'électrophorèse sur couche mince (2), pour séparer et ranger les fragments de chaque type en série dans l'ordre de leurs poids moléculaires, caractérisé en ce qu'il comporte au moins un détecteur-compteur d'électrons (5) disposé pour recevoir et compter des électrons émis par le marqueur desdits fragments, la sortie de ce détecteur-compteur d'électrons (5) étant reliée à un ordinateur, pour traitement et analyse des signaux provenant de cette sortie.

5. Dispositif selon la revendication 4, caractérisé en ce que le détecteur-compteur d'électrons (5) est disposé en bas de la colonne d'électrophorèse, en regard de la couche mince (2) soumise à l'électrophorèse, pour recevoir et compter, au fur et à mesure de cette opération, les électrons émis par le marqueur desdits fragments en mouvement migratoire sélectif défilant devant lui.

6. Dispositif selon la revendication 4 ou 5, caractérisé en ce que le détecteur-compteur d'électrons est à semi-conducteur.

7. Dispositif selon la revendication 4 ou 5, caractérisé en ce que le détecteur-compteur d'électrons comprend quatre éléments détecteurs (fig. 6) correspondant chacun à l'une des rangées de bandes A, C, G, T formées chacune, par l'électrophorèse, de fragments identiques de segments d'acides nucléiques.

8. Dispositif selon la revendication 4 ou 7, caractérisé en ce que chaque élément détecteur comporte des électrodes multiples disposées côte à côte (fig. 7, 8).

0271440

FIG.1

FIG.2

FIG.3

FIG.4

FIG.5

0271440

**FIG.6**

**FIG.7**

**FIG.8**

**FIG.9**